# EUROPEAN PATENT SPECIFICATION

(11) **EP 2 682 222 B1**
(45) Date of publication and mention of the grant of the patent: **05.10.2016**
(21) Application number: 12752839.6
(22) Date of filing: 28.02.2012
(51) Int. Cl.: B23K 35/363, B23K 35/26, B23K 35/36, B23K 35/38, B23K 35/362, B23K 35/02

(54) **FLUX**
FLUSSMITTEL
FLUX

(30) Priority: 02.03.2011 JP 2011045776
(43) Date of publication of application: 08.01.2014
(73) Proprietor: Senju Metal Industry Co., Ltd, Tokyo 120-8555 (JP)
(72) Inventor: MIZUGUCHI Daisuke, Tokyo 120-8555 (JP); SUGIURA Tatsuya, Tokyo 1208555 (JP)
(74) Representative: D Young & Co LLP
(86) International application number: PCT/JP2012/054929
(87) International publication number: WO 2012/118075

(56) References cited:
- EP-A1- 1 439 025
- WO-A1-2007/029589
- WO-A1-2007/029589
- WO-A1-2008/072654
- JP-A- 5 069 183
- JP-A- 5 212 584
- JP-A- S6 390 390
- JP-A- 11 197 879
- JP-A- H05 212 584
- JP-A- 2003 225 795
- US-A1- 2009 308 496

## Description

### [TECHNICAL FIELD]

The present invention relates to flux for solder paste of a no washing type, the flux being mixed with solder powder and it more specifically, relates to a no washing type for preventing an electrolysys reaction in electrodes to which voltage is applied when droplets are adhered to the electrodes.

### [BACKGROUND]

Electrodes are formed on a board such as a printed circuit board on which electronic components are mounted so that they correspond to terminals such as leads of the electronic components. The fixation and electric connection between the electronic components and the board are mainly performed by the soldering. On such a board, ion migration (electrochemical migration) may occur in the soldered portion between the terminal of the electronic component and the electrode of the board because of such causes that any droplets are adhered to the electrodes to which direct voltage is applied.

The ion migration (hereinafter, referred to as "migration") is a phenomenon such that in the electrodes to which direct voltage is applied, metallic ions dissolved from an anode receives electron at a cathode so that resolved metal grows at the cathode to extend to the anode and by the reduced metal, both electrodes are short-circuited. Thus, when the migration occurs, the function of the board is lost because the electrodes are short-circuited.

The flux used for the soldering generally has such an efficacy that metallic oxides on the solder and a metallic surface of the subject to be soldered are chemically removed at a temperature in which the solder is melted and metallic elements can be shifted across a boundary of both. By using the flux, any intermetallic compounds can be formed between the solder and the metallic surface of the subject to be soldered so that they can be strongly connected.

The solder paste is a composite material that is formed by mixing the solder powder and the flux. The solder paste is applied to a portion, electrodes of the board such as a printed circuit board, terminals and the like, to be soldered by means of a printing method or a discharge method. Any components are mounted on the soldered portion thereof to which the solder paste is applied. The soldering is performed so that the board is heated in a heating furnace called as "reflow furnace" to fuse the solder.

US2009/308496 discloses a soldering flux which can be mixed with solder powder to prepare a solder paste comprising (0.2-4 mass%) chosen from acidic phosphoric-acid ester and its derivatives. The resin flux further contains polar solvent. An acidic phosphoric-acid ester is chosen from acidic phosphonic acid ester and acidic phosphinic-acid ester and it can be (2-ethylhexyl) phosphate.

The flux contains any components which are not dissolved nor evaporated by heating of the soldering so that they remain around a soldered portion as residue of flux after the soldering. As one of the causes of occurrence of the above-mentioned migration, a fact such that any droplets are adhered to the electrodes is mentioned. Since rosin contained in the flux as main component has water break quality, if the residue of flux containing the rosin as the main component is formed on the soldered portion, any migration does not immediately occur because the water break quality of the rosin even when any droplets are adhered to the residue of flux.

When, however, the residue of flux is cracked, water is permeated from the cracked portion of the residue of flux into the residue of flux and this water is a cause of occurrence of the migration.

Accordingly, a measure for the migration occurring based on any droplets or the like has been taken from the past by building a structure of the board so as to have a structure for avoiding adhering any droplets to a soldered surface. On the other hand, a moisture-proof coating has been performed on the soldered surface.

On the other hand, a technology of controlling occurrence of the migration in the residue of flux and adding fatty acid ester into the flux has been proposed (For example, see Patent Document 1).

### [DOCUMENT FOR PRIOR ART]

### [PATENT DOCUMENT]

Patent Document 1: Japanese Patent Application Publication No. H11-077376

### [SUMMARY OF THE INVENTION]

### [PROBLEMS TO BE SOLVED BY THE INVENTION]

When adding fatty acid ester of glycerin to the flux, it is possible to make the residue of flux ductile and it is possible to suppress occurrence of any crack in the residue of flux even when the soldered portion after the soldering is exposed to any inferior circumstances.

Even if the residue of flux is ductile, however, it is impossible to suppress occurrence of the migration based on any causes other than the permeable cause by the crack in the residue. Namely, as such other causes of the occurrence of migration, under a situation of high temperature and high humidity, a decrease of insulation resistance in the residue of flux by moisture absorption of the residue thereof and an adhesion of absorbed water to the electrodes are mentioned.

Even if the residue of flux is ductile and this prevents water from being permeated by the crack in the residue of flux, it is impossible to control the occurrence of migration based on, under such a situation of high temperature and high humidity, the decrease of insulation resistance in the residue of flux by moisture absorption of the residue thereof, an adhesion of absorbed water to the electrodes based on the moisture absorption of the residue of flux and the like. Accordingly, it is impossible to control the occurrence of migration certainly even when the residue of flux is formed on the soldered portion and covers the soldered portion.

Further, as the measures of controlling the occurrence of migration, building a structure of the board so as to have a structure of avoiding adhering any droplets thereto and performing the moisture-proof coating thereon cause the costs for assembling the board to be increased.

The present invention has resolved such problems and has an object to provide flux, the residue of which covers the soldered portion on which the residue of flux is formed, and which can suppress the occurrence of the migration certainly.

### [MEANS FOR SOLVING THE PROBLEMS]

Inventors have paid attention to adsorption capacity of phosphoric acid ester to any metal. They have found out a fact such that by adding the phosphoric acid ester to the flux which is mixed with the solder powder to produce the solder paste, the phosphoric acid ester is adsorbed to a surface of the metal such as solder during the soldering to form a film having any hydrophobic quality.

This invention relates to flux which is mixed with solder powder to produce the solder paste, the flux containing an amount of phosphoric acid ester, which is adsorbed to a surface of a soldered portion on which residue of flux is formed during the soldering to form a film having hydrophobic quality.

The addition amount of phosphoric acid ester is not less than 1 % through less than 30 %. excluding an amount of not less than 1 mass % through not more than 4 mass %. It is to be noted that % is mass% unless otherwise specified. Further, it is preferable that the phosphoric acid ester is any one of (2-ethylhexyl) phosphate, monoisodecyl phosphate, monobutyl phosphate, dibutyl phosphate, monolauryl phosphate, monostearyl phosphate, monooleyl phosphate, tetracosyl phosphate or bis(2-ethylhexyl) phosphate.

### [EFFECTS OF THE INVENTION]

According to the flux of the present invention, by adding the phosphoric acid ester having adsorption capacity to any metal thereto, when the flux of the present invention is mixed with the solder powder to produce the solder paste and by using the solder paste to perform the soldering, the residue of flux is formed, the phosphoric acid ester is adsorbed to a metallic surface of the soldered portion on which the residue of flux is formed so that a film having hydrophobic quality is formed.

Accordingly, the film of phosphoric acid ester having hydrophobic quality, which is absorbed to the soldered portion, prevents any droplets from being adhered to the soldered portion on which the residue of flux is formed. When the soldered portion is exposed to any inferior circumstances and the residue of flux is cracked, it is possible to prevent the droplets from being adhered to the soldered portion, which allows the occurrence of migration because of adhesion of droplets or the like to be suppressed.

Further, even when the residue of flux absorbs moisture under a circumference of high temperature and high humidity and the insulation resistance of the residue of flux is decreased or even when water is adhered because of the moisture absorption of the residue of flux, the film of phosphoric acid ester having hydrophobic quality, which is absorbed to the soldered portion, can suppress the occurrence of migration. Accordingly, the board soldered by using the solder paste in which the flux according to this invention is mixed and an electronic device on which this board is mounted can realize higher reliability.

Further, since the phosphoric acid ester added to the flux obtains an effect of preventing the migration from occurring, any structure of preventing droplets from being adhered and/or the moisture-proof coating, which have been previously required to the board, are unnecessary so that the costs required for assembling may be decreased.

### [EMBODIMENTS FOR CARRYING OUT THE INVENTION]

The flux according to these embodiments is mixed with the solder powder to produce a solder paste. The flux according to these embodiments contains phosphoric acid ester which adsorbs to a surface of metal such as the solder during the soldering. As the phosphoric acid ester, any one of (2-ethylhexyl) phosphate, monoisodecyl phosphate, monobutyl phosphate, dibutyl phosphate, monolauryl phosphate, monostearyl phosphate, monooleyl phosphate, tetracosyl phosphate or bis(2-ethylhexyl) phosphate is preferable.

The flux contains any components which are not dissolved nor evaporated by heating of the soldering so that the residue of flux is formed after the soldering so as to cover the soldered portion. Further, in the solder paste according to the embodiment in which a predetermined amount of phosphoric acid ester is added to the flux, the phosphoric acid ester is not evaporated at the heating temperature of the soldering time and adsorbs to the surface of metal such as the solder and the electrode soldered by the solder so that a film having hydrophobic quality is formed on the surface of the soldered portion.

This film blocks any contact between the droplet and the metal, which suppresses occurrence of the migration. If the soldered portion is exposed under inferior circumstance such as circumstance in which there is a large change in temperature, circumstance in which changes in temperature are repeated, circumstance in which it is shocked while the residue of flus exists on the soldered portion, it is possible to prevent water from being directly contacted to any metallic portion of the soldered portion because the surface of the soldered portion is covered by the hydrophobic film even if the residue of flux is cracked and water is permeated thereto.

Even when the residue of flux absorbs moisture under a circumference of high temperature and high humidity and the insulation resistance of the residue of flux is decreased or even when water is adhered to the electrodes because of the moisture absorption of the residue of flux, it is possible to prevent water from being directly contacted to any metallic portion of the soldered portion because the surface of the soldered portion is covered by the film having hydrophobic quality. This enables the occurrence of migration to be suppressed.

Here, based on an addition amount of phosphoric acid ester, aspects of the residue of flux vary. When increasing the addition amount of phosphoric acid ester, the residue of flux is liquidized. Accordingly, taking into consideration the aspects of the residue of flux, it is preferable the addition amount of phosphoric acid ester is not less than 1% through less than 30% in mass% (excluding an amount of not less than 1 mass% through not more than 4 mass%).

### <Embodiments>

The flux of the embodiments and the comparison examples was prepared on the basis of the compositions shown in the flowing tables; the solder pastes were prepared using the flux of the embodiments and the comparison examples; and the effects of preventing the migration from occurring were compared with and without the addition of phosphoric acid ester. Relationships between the addition amount of phosphoric acid ester and aspects of the residue of flux were compared.

### (1) Composition of Flux

The flux of the embodiments and that of the comparison examples, according to compositions shown in the following Tables 1 and 2, were prepared. The solder paste was prepared so that the solder powder (Composition: Sn-3Ag-0.5Cu, Particle Size: 25-36 µm) became 89%. It is to be noted that composition rates shown in Tables 1 and 2 are shown by mass%.

**[Table 1]**

| | EMBODIMENT 1 | EMBODIMENT 2 | EMBODIMENT 3 | EMBODIMENT 4 | EMBODIMENT 5 | EMBODIMENT 6 |
|---|---|---|---|---|---|---|
| ROSIN | 50% | 50% | 50% | 50% | 50% | 50% |
| (2-ETHYLHEXYL) PHOSPHATE | 10% | | | | | |
| MONOISODECYL PHOSPHATE | | 10% | | | | |
| MONOBUTYL PHOSPHATE | | | 10% | | | |
| DIBUTYL PHOSPHATE | | | | 10% | | |
| MONOLAURYL PHOSPHATE | | | | | 10% | |
| MONOSTEARYL PHOSPHATE | | | | | | 10% |
| MONOOLEYL PHOSPHATE | | | | | | |
| TETRACOSYL PHOSPHATE | | | | | | |
| BIS(2-ETHYLHEXYL) PHOSPHATE | | | | | | |
| DIETHYLENE GLYCOL MONOHEXYL ETHER | 34% | 34% | 34% | 34% | 34% | 34% |
| HARDENED CASTOR OIL | 5% | 5% | 5% | 5% | 5% | 5% |
| DIETHYLAMINE HYDROBROMATE | 1% | 1% | 1% | 1% | 1% | 1% |

**[Table 2]**

| | EMBODIMENT 7 | EMBODIMENT 8 | EMBODIMENT 9 | EMBODIMENT 10 | COMPARISON EXAMPLE 1 | COMPARISON EXAMPLE 2 |
|---|---|---|---|---|---|---|
| ROSIN | 50% | 50% | 50% | 50% | 50% | 50% |
| (2-ETHYLHEXYL) PHOSPHATE | | | | 1% | 30% | |
| MONOISODECYL PHOSPHATE | | | | | | |
| MONOBUTYL PHOSPHATE | | | | | | |
| DIBUTYL PHOSPHATE | | | | | | |
| MONOLAURYL PHOSPHATE | | | | | | |
| MONOSTEARYL PHOSPHATE MONOSTEARYL PHOSPHATE | | | | | | |
| MONOOLEYLPHOSPHATE | 10% | | | | | |
| TETRACOSYL PHOSPHATE | | 10% | | | | |
| BIS(2-ETHYLHEXYL) PHOSPHATE | | | 10% | | | |
| DIETHYLENE GLYCOL MONOHEXYL ETHER | 34% | 34% | 34% | 43% | 14% | 44% |
| HARDENED CASTOR OIL | 5% | 5% | 5% | 5% | 5% | 5% |
| DIETHYLAMINE HYDROBROMATE | 1% | 1% | 1% | 1% | 1ù | 1% |

In Tables 1 and 2, (2-ethylhexyl) phosphate, monoisodecyl phosphate, monobutyl phosphate, dibutyl phosphate, monolauryl phosphate, monostearyl phosphate, monooleyl phosphate, tetracosyl phosphate or bis(2-ethylhexyl) phosphate is one example of the phosphoric acid ester, and they were selectively added in the embodiments. It is to be noted that in the comparison example 1, in order to compare the relationship between the addition amount of phosphoric acid ester and aspects of the residue of flux, (2-ethylhexyl) phosphate was added as one example of phosphoric acid ester. In the comparison example 2, no phosphoric acid ester was added.

As a component composed of the flux of the embodiments and the comparison examples, rosin mainly has an action of eliminating oxides from the metallic surface. Diethylene glycol monohexyl ether has an action of dissolving rosin and/or other additive agent. As remaining components of the flux, hardened castor oil was added as viscosity modifier and diethylamine hydrobromate was added as activator.

### (2)Test Method:

The solder paste of the embodiments and the comparison examples shown in Tables 1 and 2 was printed to electrodes formed on a board with a pitch of 0.5 mm. Apart having leads with the same pitch as that of the electrodes was then mounted on the board. It was soldered in a reflow furnace. In order to perform an accelerated deterioration test, deionized water dripped down to the soldered electrodes and voltage of 8V was applied across the leads. Initiation time of migration was measured while observing using a stereoscopic microscope.

### (3) Results:

The initiation time of migration is shown in Tables 3 and 4 as follows:

**[Table 3]**

| | EMBODIMENT | EMBODIMENT 2 | EMBODIMENT 3 | EMBODIMENT 4 | EMBODIMENT 5 | EMBODIMENT 6 |
|---|---|---|---|---|---|---|
| MIGRATION GENERATION TIME [sec] | 480 OR MORE | 480 OR MORE | 480 OR MORE | 480 OR MORE | 480 OR MORE | 480 OR MORE |

**[Table 4]**

| | EMBODIMENT 7 | EMBODIMENT 8 | EMBODIMENT 9 | EMBODIMENT 10 | COMPARISON EXAMPLE 1 | COMPARISON EXAMPLE 2 |
|---|---|---|---|---|---|---|
| MIGRATION GENERATION TIME [sec] | 480 OR MORE | 480 OR MORE | 480 OR MORE | 360 | 480 OR MORE | 160 |

When 1%, by mass%, of phosphoric acid ester is added as shown in the embodiment 10 of the above-mentioned Table 2, it is understood that the initiation time of migration is extended as shown in Table 4 as compared with a case of the comparison example 2 in which no phosphoric acid ester is added and the effect of preventing the migration from occurring is shown. As shown in the embodiments 1 through 9, when the addition amount of phosphoric acid ester is about 10%, it is understood that the initiation time of migration is sufficiently extended so that the effect of preventing the migration from occurring is further improved.

Thus, it is sufficient that the addition amount of phosphoric acid ester is not less than 1%, by mass%, and it is understood that the addition amount of phosphoric acid ester is preferably about 10% in order to improve the effect of preventing the migration from occurring excluding an amount of not less than 1 mass % through not more than 4 mass %.

On the other hand, as shown in the comparison example 1, when the addition amount of phosphoric acid ester is 30%, by mass%, the film having hydrophobic quality is formed on the soldered portion on which the residue of flux is formed but aspects of the residue of flux are liquidized. If the residue of flux is liquidized, it maintains the effect of preventing the migration from occurring. However, there is a danger of causing any foreign matter or the like to adhere to the soldered portion on which the residue of liquidized flux is formed after the soldering and decreasing insulation resistance between the electrodes so that electric reliability of the circuit is lost.

Thus, taking into consideration the effect of preventing the migration from occurring, the addition amount of phosphoric acid ester may be at least 30%, by mass%, but, taking into consideration the aspects of the residue of flux, it is understood that the addition amount of phosphoric acid ester is preferably less than 30%.

Based on the above-mentioned results, in order to show the effect of preventing the migration from occurring, by adding phosphoric acid ester to the flux, and to form the film having hydrophobic quality based on phosphoric acid ester on the soldered portion on which the residue of flux is formed, it is understood that phosphoric acid ester of not less than 1 % through less than 30 %, by mass%, excluding an amount of not less than 1 mass % through not more than 4 mass %, is added. It is to be noted that when adding phosphoric acid ester to the flux, it is also understood that even when decreasing an addition of a halide as an activator, wettability thereof can be improved.

### INDUSTRIAL APPLICABILITY

The flux according to this invention is also applicable to an electronic device used under the circumstance which may receive any influence by water and/or dusts such as an electronic device mounted on a vehicle.

## Claims

1. Flux for solder paste of a no washing type, the flux being mixed with solder powder to produce the solder paste, and the flux comprising an amount of phosphoric acid ester of not less than 1 mass% through less than 30 mass% excluding an amount of not less than 1 mass % through not more than 4 mass %, the phosphoric acid ester being adsorbed to a metal surface of a soldered portion during the soldering to form a film having hydrophobic quality and remaining after the soldering, the film preventing from occurring an electrolysis reaction in electrodes to which voltage is applied when droplets are adhered to the electrodes.

2. The flux for solder paste of a no washing type according to Claim 1, wherein the phosphoric acid ester comprises is any one of (2-ethylhexyl) phosphate, monoisodecyl phosphate, monobutyl phosphate, dibutyl phosphate, monolauryl phosphate, monostearyl phosphate, monooleyl phosphate, tetracosyl phosphate or bis(2-ethylhexyl) phosphate.

## Patentansprüche

1. Flussmittel für Lötpaste eines Nichtwaschtyps, wobei das Flussmittel mit Lötpulver gemischt wird, um die Lötpaste herzustellen, und das Flussmittel eine Menge an Phosphorsäureester von nicht weniger als 1 Masse-% bis weniger als 30 Masse-%, ausschließlich einer Menge von nicht weniger als 1 Masse-% bis nicht mehr als 4 Masse-% umfasst,
wobei der Phosphorsäureester an eine Metalloberfläche eines gelöteten Teils während des Lötens adsorbiert wird, um einen Film zu bilden, der eine hydrophobe Qualität aufweist und nach dem Löten verbleibt, wobei der Film das Auftreten einer Elektrolysereaktion in Elektroden verhindert, an die eine Spannung angelegt wird, wenn Tröpfchen an den Elektroden anhaften.

2. Flussmittel für Lötpaste eines Nichtwaschtyps nach Anspruch 1, wobei der Phosphorsäureester irgendeines von (2-Ethylhexyl)phosphat, Monoisodecylphosphat, Monobutylphosphat, Dibutylphosphat, Monolaurylphosphat, Monostearylphosphat, Monooleylphosphat, Tetracosylphosphat oder Bis(2-ethylhexyl)phosphat umfasst.

## Revendications

1. Flux pour pâte à braser d'un type sans nettoyage, le flux étant mélangé à une poudre de brasure afin de produire la pâte à braser, et le flux comprenant une quantité d'ester d'acide phosphorique non inférieure à 1 % en masse et inférieure à 30 % en masse, à l'exclusion d'une quantité non inférieure à 1 % en masse et non supérieure à 4 % en masse, l'ester d'acide phosphorique étant adsorbé sur une surface métallique d'une partie brasée lors du brasage afin de former un film présentant un caractère hydrophobe et restant après le brasage, le film empêchant une réaction d'électrolyse de se produire dans des électrodes auxquelles une tension est appliquée lorsque des gouttelettes adhèrent aux électrodes.

2. Flux pour pâte à braser d'un type sans nettoyage selon la revendication 1, dans lequel l'ester d'acide phosphorique est l'un quelconque des composés suivants : (2-éthylhexyl) phosphate, monoisodécyl phosphate, monobutyl phosphate, dibutyl phosphate, monolauryl phosphate, monostéaryl phosphate, monooléyl phosphate, tétracosyl phosphate ou bis(2-éthylhexyl) phosphate.
